# EUROPÄISCHE PATENTSCHRIFT

(11) **EP 1 932 577 B1**
(45) Veröffentlichungstag und Bekanntmachung des Hinweises auf die Patenterteilung: **14.01.2009**
(21) Anmeldenummer: 06077055.9
(22) Anmeldetag: 15.11.2006
(51) Int. Cl.: B01D 46/04

(54) **Reinigungsvorrichtung mit Reinigungskopf und Verfahren zur Reinigung von Schlauchfiltern**
Cleaning device comprising a cleaning head and method for cleaning bag-type tube filters
Appareil de nettoyage comprennant une tête de nettoyage et méthode de nettoyage pour filtre à manche

(43) Veröffentlichungstag der Anmeldung: 18.06.2008
(73) Patentinhaber: Reining, Christian, 48163 Münster (DE)
(72) Erfinder: Reining, Christian, 48163 Münster (DE)
(74) Vertreter: Kayser, Christoph

(56) Entgegenhaltungen:
- EP-A1- 0 065 094
- EP-A1- 1 543 872
- JP-A- 2005 125 293
- US-A- 5 182 832
- US-A1- 2002 007 734

## Beschreibung

Die vorliegende Erfindung betrifft eine Reinigungsvorrichtung für Schlauchfilter mit einem Reinigungskopf, der wenigstens eine um eine Längsachse rotierende Düse aufweist, sowie ein Verfahren zur Reinigung von Schlauchfiltern gemäß Anspruch 7.

Eine Reinigungsvorrichtung für Schlauchfilter mit einem Reinigungskopf ist aus der EP Nr. 1 543 872 bekannt.

Die darin beschriebene Reinigungsvorrichtung weist einen Reinigungskopf auf, an dem wenigstens eine Düse und insbesondere mehrere Düsen drehbar um eine Längsachse des Reinigungskopfes angeordnet sind. Im Betrieb wird der Reinigungskopf an einem Schlauchelement in einen Filterschlauch geführt und in diesem hin und her bewegt. Über eine Druckmittelquelle wird dem Reinigungskopf über das Schlauchelement ein Druckmittel zugeführt, das aus den Düsen austritt und an der Innenwand des Filterschlauchs auftrifft. Dadurch werden in dem Filterschlauch Druckwellen erzeugt, die Eigenschwingungen des Schlauchmaterials herbeiführen, so dass ein an dem Filterschlauch sitzendes Filtrat abfällt. Im Betrieb wird beim Austreten des Druckmittels aus den Düsen in deren Nähe ein Unterdruck erzeugt, so dass der Reinigungskopf nicht im Zentrum des Filterschlauchs bleibt, sondern an die Innenwand des Filterschlauchs gezogen wird. Tatsächlich beschreibt das Schlauchelement mit dem Reinigungskopf eine spiralförmige Bewegung entlang der Längsachse des Filterschlauchs. Eine Berührung des Reinigungskopfes mit dem Material des Filterschlauches führt direkt oder spätestens nach einigen Reinigungsvorgängen zu einer Verletzung des Materials. Bleibt aber während des Reinigungsvorganges ein Stützkorb im Filterschlauch, so dass der Reinigungskopf nicht an das Material des Filterschlauchs sondern an den Stützkorb anstoßen kann, lädt sich der Reinigungskopf statisch auf, so dass Spannungen von 2000 V bis 3000 V erzeugt werden.

Es ist von Nachteil, dass im vorgenannten Stand der Technik bei der Reinigung von Filterschläuchen eine Berührung des Reinigungskopfes mit dem Filterschlauch zu einer Verletzung des Filtermaterials führen kann. Es ist auch von Nachteil, dass eine Reinigung mit eingesetztem Stützkorb zum Schutz des Filtermaterials zu einer erheblichen statischen Aufladung führt.

Die Aufgabe der vorliegenden Erfindung ist daher, eine Reinigungsvorrichtung für Schlauchfilter und ein Verfahren zum Reinigen eines Schlauchfilters mit einer solchen Reinigungsvorrichtung zu schaffen, mit welcher/welchern eine berührungsfreie Reinigung des Schlauchfilters mit Stützkorb möglich ist.

Die Aufgabe wird dadurch gelöst, dass der Reinigungskopf einen feststehenden Mantels mit glatter Außenfläche aufweist, der die wenigstens eine rotierende Düse in einem Abstand umgibt und in welchem eine Reihe von Durchgangslöchern ausgebildet sind, die über den Umfang des Mantels verteilt sind und in Bezug zu jeder Düse so angeordnet sind, dass ein im Betrieb aus jeder Düse austretender Strahl wenigstens zeitweise durch ein Durchgangsloch hindurch treten kann.

Mit der erfindungsgemäßen Reinigungsvorrichtung ist es nunmehr möglich, den Reinigungskopf im Wesentlichen entlang einer Längsachse eines Schlauchfilters zu bewegen, ohne dass dieser im Betrieb durch einen Unterdruck an die Innenfläche des Schlauchfilters bzw. eines darin eingesetzten Stützkorbes gezogen wird. Darüber hinaus wird durch den Mantel mit glatter Außenfläche verhindert, dass eine Berührung mit einem eingesetzten Stützkorb eine statische Aufladung in der Größenordnung des Standes der Technik nach sich zieht.

Der Druckmittelstrahl erzeugt durch die Drehung der Düsen bzw. des Reinigungskopfes einen Unterdruck in einem Abstandsbereich von 5 bis 6 mm von den Düsen in Wirkrichtung derselben. Durch den Mantel mit den Durchgangslöchern im Bereich der Düsen wird ein Abstand von der Düse bis zur Austrittsseite des Durchgangsloches bzw. der Außenfläche des Mantels von ca. 10 mm hergestellt, so dass an der Außenseite des Reinigungskopfes Unterdrücke nicht mehr auftreten können. Selbst bei einer Berührung der Mantelaußenfläche mit der Innenseite eines Schlauchfilters oder eines eingesetzten Stützkorbes führt nicht zu einem Ansaugen desselben bzw. zu einer spiralförmigen Drehbewegung entlang der Längsachse. Zudem wird durch die glatte Außenfläche des Schutzmantels bei einer eventuellen Berührung mit einem eingesetzten Stützkorb die Reibung derart verringert, dass kaum eine oder keine reibungsbedingte statische Aufladung erfolgt.

Mit dem erfindungsgemäßen Reinigungskopf wird zudem verhindert, dass sich dieser im Betrieb auf einer undefinierten und unkontrollierten spiralförmigen Bewegungsbahn entlang der Längsachse des Schlauchfilters bewegt. Vielmehr ist es nunmehr möglich, den Reinigungskopf während des Reinigungsbetriebes immer im Zentrum eines Schlauchfilters entlang seiner Längsachse hin und her zu bewegen.

Ein weiterer Vorteil der Reinigungsvorrichtung gemäß vorliegender Erfindung besteht auch darin, dass die Durchgangslöcher im Umfang des Mantels eine wiederkehrende Unterbrechung des aus den Düsen austretenden Druckstrahls erzeugen. Die Dauer der Unterbrechung ist abhängig vom Abstand der Durchgangslöcher zueinander. Die auf diese Weise erzeugten Impulse sorgen für eine bessere Abreinigung bei geringerer Druckmittelmenge.

Aufgrund der Tatsache, dass der Reinigungsvorgang mit eingesetztem Stützkorb erfolgen kann, verringert sich die Zeit für einen Reinigungsvorgang, so dass sich das auch kostensenkend auswirkt.

Schließlich wird mit der Möglichkeit einer Reinigung mit eingesetztem Stützkorb auch eine mit dem Herausziehen des Stützkorbes verbundene Staubentwicklung und Verdreckung der Umgebung verhindert, so dass nachfolgende Reinigungsarbeiten entfallen können.

Diese und weitere Vorteile ergeben sich aus den Merkmalen der Unteransprüche 2 bis 6 und 8.

Eine Ausführungsform der vorliegenden Erfindung wird im Folgenden anhand der Zeichnungen näher beschrieben.

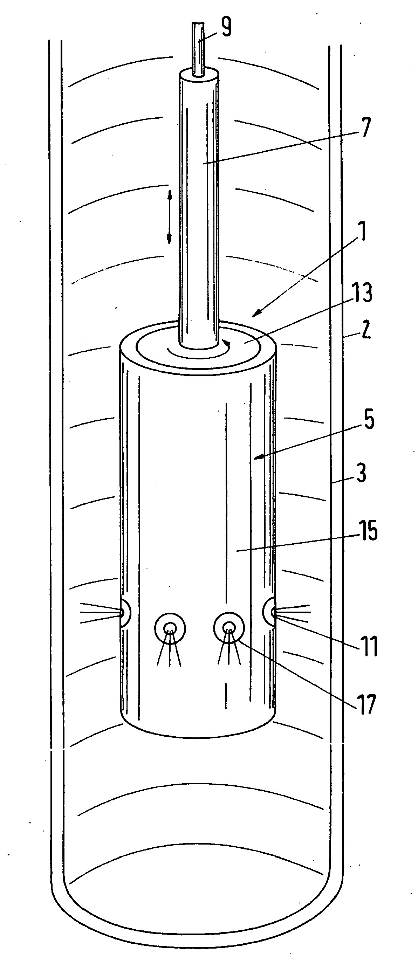

Die einzige Figur zeigt eine schematisch dargestellte Reinigungsvorrichtung mit einem Reinigungskopf gemäß vorliegender Erfindung, der in einen Schlauchkörper eingefahren ist, wobei der Schlauchkörper angeschnitten dargestellt ist.

Die schematische Darstellung in der Figur zeigt eine Situation, in welcher die Reinigungsvorrichtung 1 in einen Schlauchkörper 2 eingefahren ist, in dem sich noch ein Stützkorb 3 befindet. Der Stützkorb 3 ist in der Figur dargestellt, da eine Reinigung mit der vorliegenden Reinigungsvorrichtung 1 auch mit eingesetztem Stützkorb 3 möglich ist. Natürlich kann der Stützkorb 3 auch entnommen werden und eine Reinigung dann mit der Reinigungsvorrichtung 1 durchgeführt werden.

Die Reinigungsvorrichtung umfasst einen Reinigungskopf 5, der an einem Ende eines Schlauchelements 7 angebracht ist. Über das Schlauchelement 7 besteht eine Verbindung 9 zu einer Druckmittelversorgung (nicht dargestellt). Das zur Reinigung verwendete Druckmittel ist vorzugsweise Druckluft kann aber im Grunde ein beliebiges Druckfluid sein, das wahlfrei je nach den vorliegenden Reinigungsbedingungen eingesetzt werden kann. Bei Verwendung von Druckluft ist die Verbindung 9 regelmäßig ein üblicher Druckschlauch, der entwder durch das Schlauchelement 7 an den Reinigungskopf 5 geführt ist und selbst das Schlauchelement 7 bildet. Der Reinigungskopf weist an seinem Umfang wenigstens eine Düse 11 auf, die um eine Längsachse L des Reinigungskopfes 5 drehbar ist. In der vorliegenden Ausführungsform sind eine Mehrzahl von Düsen 11 am Umfang des Reinigungskopfes 5 angeordnet, die sich um die Längsachse L des Reinigungskopfes 5 drehen. Die Drehbarkeit der Düsen 11 um die Längsachse des Reinigungskopfes 5 kann in beliebiger konstruktiver Weise bewirkt werden. In der vorliegenden Ausführungsform dreht sich ein inneres Düsenteil 13 (siehe Pfeil) um die Längsachse L. An diesem Düsenteil 13 sind die Düsen 11 mit einer vorbestimmbaren, im wesentlichen radialen oder tangentialen Wirkrichtung angebracht.

Außen um das innere Düsenteil 13 herum ist ein Mantel 15 angebracht, der feststeht, also keine Drehung um die Längsachse L durchführt, und eine glatte Außenfläche aufweist. In dem Mantel 15 ist wenigstens ein Durchgangsloch 17 ausgebildet, das je nach Drehstellung des inneren Düsenteils 13 mit einer Düse 11 fluchten kann, das heißt, bei einer Umdrehung des inneren Düsenteils 13 bzw. der Düse 11 einmal mit derselben Düse 11 bzw. dem von dieser erzeugten Strahlachse zusammenfällt, so dass dann ein Druckmittelstrahl aus der entsprechenden Durchgangsöffnung 17 austreten kann.

In der dargestellten Ausführungsform sind eine Mehrzahl von Durchgangsöffnungen 17 im Umfang des Mantels 15 ausgebildet. Die Anzahl der Durchgangsöffnungen 17 kann mit der Anzahl der Düsen 11 identisch sein, dies ist aber nicht zwingend erforderlich. Durch die Wahl einer bestimmten Anzahl von Durchgangslöchern 17 und einer bestimmten Anzahl von Düsen 11 kann die Anzahl von Impulsen pro Umdrehung des inneren Düsenteils 13 bzw. der Düsen 11 sowie die Häufigkeit eines Impulses pro Flächeneinheit des Schlauchkörpers 2 festgelegt werden.

Der Mantel 15 sitzt in einem Abstand zu den Düsen 11 bzw. dem inneren Düsenteil 13. Der Abstand zwischen der Düse 11 und der Außenfläche des Mantels 15 beträgt an den Durchgangslöchern 17 von 8 bis 15 mm, vorzugsweise etwa 10 mm. Dieser Abstand zwischen jeder Düse 11 und der Außenfläche des Mantels 15 im Bereich des wenigstens einen Durchgangslochs 17 bewirkt, dass an der Außenfläche des Mantels 15 kein Unterdruck entsteht, wenn ein Druckstrahl aus der Düse11 und durch die Durchgangsöffnung 17 austritt.

Durch die Impulse, die aufgrund der Durchgangsöffnungen 17 bzw. der Abstände zwischen den Durchgangsöffnungen 17 erzeugt werden, wird die Abreinigung des Schlauchfilters 2 verbessert. Die bei einem Reinigungsvorgang benötigte Luftmenge kann von bisher 3.000 I auf nunmehr 1.000 I mit der erfindungsgemäßen Reinigungsvorrichtung verringert werden.

## Patentansprüche

1. Reinigungsvorrichtung (1) für Schlauchfilter mit einem Reinigungskopf (5), der wenigstens eine um eine Längsachse (L) rotierende Düse (11) aufweist,
**dadurch gekennzeichnet,**
**dass** der Reinigungskopf (5) einen feststehenden Mantel (15) mit glatter Außenfläche aufweist, der die wenigstens eine rotierende Düse (11) in einem Abstand umgibt und in welchem eine Reihe von Durchgangslöchern (17) ausgebildet sind, die über den Umfang des Mantels (15) verteilt sind und in Bezug zu jeder Düse (11) so angeordnet sind, dass ein im Betrieb aus jeder Düse (11) austretender Strahl wenigstens zeitweise durch ein Durchgangsloch (17) hindurchtreten kann.

2. Reinigungsvorrichtung nach Anspruch 1,
**dadurch gekennzeichnet,**
**dass** die Durchgangslöcher (17) in einer Wirkebene mit jeder Düse (11) über den Umfang des Mantels (15) verteilt sind.

3. Reinigungsvorrichtung nach Anspruch 1 oder 2,
**dadurch gekennzeichnet,**
**dass** der Reinigungskopf (5) an einem Sclauchelement (7) angeordnet ist, das entlang einer Längsachse (L) eines Schlauchkörpers (2) hin und her bewegbar ist.

4. Reinigungsvorrichtung nach einem der Ansprüche 1 bis 3,
**dadurch gekennzeichnet,**
**dass** der Reinigungskopf (5) im Betrieb einen Druck erzeugt, der diesen in Abstand zu dem Schlauchkörper (2) hält.

5. Reinigungsvorrichtung nach einem der vorstehenden Ansprüche,
**dadurch gekennzeichnet,**
**dass** die Düsen (11) eine Luftmenge von ≤1000 I für einen Reinigungsvorgang ausstoßen.

6. Reinigungsvorrichtung nach Anspruch 5,
**dadurch gekennzeichnet,**
**dass** die Düsen (11) eine Luftmenge von ≤800 I in einem Reinigungsvorgang ausstoßen.

7. Verfahren zur Reinigung von Schlauchfiltern mit einer Reinigungsvorrichtung nach einem der Ansprüche 1 bis 6, bei welchem ein an einem Schlauchelement angebrachter Reinigungskopf wiederholt in den Schlauchkörper hinein und heraus bewegt wird, wobei der Reinigungskopf rotierende Düsen aufweist, die einen Druck erzeugen,
**dadurch gekennzeichnet,**
**dass** bei einem eingesetzten Stützkorb ein Druck erzeugt wird, der einen Abstand zwischen Reinigungskopf und Stützkorb hält, oder dass ohne Stützkorb ein Druck erzeugt wird, der einen Abstand zwischen dem Reinigungskopf und dem Schlauchkörper hält.

8. Verfahren nach Anspruch 7,
**dadurch gekennzeichnet,**
**dass** ein von den Düsen erzeugter Strahl vom Reinigungskopf diskontinuierlich abgegeben wird.

## Claims

1. A cleaning device (1) for hose filters comprising a cleaning head (5) having at least one nozzle (11) rotating about a longitudinal axis (L),
**characterised in**
**that** the cleaning head (5) comprises a fixed jacket (15) having a smooth outer surface which surrounds the at least one rotating nozzle (11) at a distance and in which a series of through holes (17) are formed, said holes being distributed over the circumference of the jacket (15) and being arranged with respect to each nozzle (11) such that a jet emerging from each nozzle (11) during operation can pass through a through hole (17) at least intermittently.

2. The cleaning device according to claim 1,
**characterised in**
**that** the through holes (17) are distributed in a plane of action with each nozzle (11) over the circumference of the jacket (15).

3. The cleaning device according to claim 1 or 2,
**characterised in**
**that** the cleaning head (5) is arranged on a hose element (7) which can be moved to and fro along a longitudinal axis (L) of a hose body (2).

4. The cleaning device according to any one of claims 1 to 3,
**characterised in**
**that** the cleaning head (5) produces a pressure during operation which holds this at a distance from the hose body (2).

5. The cleaning device according to any one of the preceding claims,
**characterised in**
**that** the nozzles (11) eject a quantity of air of ≤1000 1 for a cleaning process.

6. The cleaning device according to claim 5,
**characterised in**
**that** the nozzles (11) eject a quantity of air of ≤800 1 in a cleaning process.

7. A method for cleaning hose filters comprising a
cleaning device according to one of claims 1 to 6, in which a cleaning head attached to a hose element is repeatedly moved into and out of the hose body, wherein the cleaning head comprises rotating nozzles which produce a pressure,
**characterised in**
**that** when a support cage is inserted, a pressure is generated which maintains a distance between cleaning head and support cage or that a pressure is generated without a support cage which maintains a distance between the cleaning head and the hose body.

8. The method according to claim 7,
**characterised in**
**that** a jet produced by the nozzles is released discontinuously from the cleaning head.

## Revendications

1. Dispositif de nettoyage (1) pour filtres tubulaires, comprenant une tête de nettoyage (5) qui comporte au moins une buse (11) tournant autour d'un axe longitudinal (L),
**caractérisé en ce que**
la tête de nettoyage (5) comporte une chemise fixe (15) à surface extérieure lisse qui entoure l'au moins une buse rotative (11) à distance et dans laquelle sont réalisés une série de trous de passage (17) qui sont répartis sur la circonférence de la chemise (15) et sont disposés par rapport à chaque buse (11) de manière à ce qu'un jet sortant en cours de fonctionnement de chaque buse (11) puisse passer du moins provisoirement dans un trou de passage (17).

2. Dispositif de nettoyage selon la revendication 1,
**caractérisé en ce que**
les trous de passage (17) sont répartis dans un plan actif avec chaque buse (11) sur la circonférence de la chemise (15).

3. Dispositif de nettoyage selon la revendication 1 ou 2,
**caractérisé en ce que**
la tête de nettoyage (5) est disposée sur un élément tubulaire (7) qui est mobile en va et vient le long d'un axe longitudinal (L) d'un corps tubulaire (2).

4. Dispositif de nettoyage selon une des revendications 1 à 3,
**caractérisé en ce que**
la tête de nettoyage (5) génère en cours de fonctionnement une pression qui la maintient à distance du corps tubulaire (2).

5. Dispositif de nettoyage selon une des revendications précédentes,
**caractérisé en ce que**
les buses (11) éjectent une quantité d'air ≤ 1000 1 pour une opération de nettoyage.

6. Dispositif de nettoyage selon la revendication 5,
**caractérisé en ce que**
les buses (11) éjectent une quantité d'air ≤ 800 1 au cours d'une opération de nettoyage.

7. Procédé de nettoyage de filtres tubulaires à l'aide d'un dispositif de nettoyage selon une des revendications 1 à 6 dans lequel une tête de nettoyage installée sur un élément tubulaire est rentrée et sortie à répétition du corps tubulaire, la tête de nettoyage comportant des buses rotatives qui génèrent une pression,
**caractérisé en ce que,**
en cas d'insertion d'un panier support, il est généré une pression qui conserve une distance entre la tête de nettoyage et le panier support ou qu'il est généré sans panier support une pression qui conserve une distance entre la tête de nettoyage et le corps tubulaire.

8. Procédé selon la revendication 7,
**caractérisé en ce que**
un jet généré par les buses est distribué de manière discontinue par la tête de nettoyage.
